# EUROPÄISCHE PATENTSCHRIFT

(11) **EP 4 542 074 B1**
(45) Veröffentlichungstag und Bekanntmachung des Hinweises auf die Patenterteilung: **18.03.2026**
(21) Anmeldenummer: 24205802.2
(22) Anmeldetag: 10.10.2024
(51) Int. Cl.: F16D 27/09, F16D 27/118

(54) **ELEKTROMAGNETISCHE KUPPLUNG UND VERFAHREN ZUM BETÄTIGEN EINER ELEKTROMAGNETISCHEN KUPPLUNG**
ELECTROMAGNETIC CLUTCH AND METHOD FOR ACTUATING AN ELECTROMAGNETIC CLUTCH
EMBRAYAGE ÉLECTROMAGNÉTIQUE ET PROCÉDÉ D'ACTIONNEMENT D'UN EMBRAYAGE ÉLECTROMAGNÉTIQUE

(30) Priorität: 19.10.2023 DE 102023128799
(43) Veröffentlichungstag der Anmeldung: 23.04.2025
(73) Patentinhaber: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE)
(74) Vertreter: Prinz & Partner mbB

(56) Entgegenhaltungen:
- DE-A1- 102004 013 450
- US-A1- 2021 190 150
- US-A1- 2024 352 979

## Beschreibung

Die Erfindung betrifft eine elektromagnetische Kupplung und ein Verfahren zum Betätigen einer elektromagnetischen Kupplung.

Der Begriff "elektromagnetische Kupplung" soll dabei darauf abstellen, dass die Kupplung elektromagnetisch betätigt wird. Die Drehmomentübertragung bei geschlossener Kupplung kann jedoch form- und/oder reibschlüssig erfolgen. Anders ausgedrückt wird die Kupplung durch eine Kombination aus magnetischen Kräften und mechanischen Kräften geschaltet.

Soll temporär Drehmoment von einer Welle auf eine andere, koaxial dazu ausgerichtete Welle übertragen werden, ohne dass diese beiden Wellen dauerhaft verbunden werden, so kommen typischerweise Kupplungen zum Einsatz. Hierbei wird zwischen reibschlüssigen und formschlüssigen Kupplungen unterschieden. Die vorliegende Erfindung beschränkt sich dabei auf formschlüssige Kupplungen.

Für formschlüssige Kupplungen werden häufig verschiebbare Schaltmuffen eingesetzt. Diese weisen eine oder auch mehrere verschiedene Verzahnungen auf, welche in Gegenverzahnungen greifen, sodass ein Formschluss entsteht, über den Drehmoment von einer auf eine andere Welle übertragen werden kann.

Aus dem Stand der Technik sind elektromagnetische Kupplungen bekannt, bei denen die Verstellung der Schaltmuffe über eine Spule erfolgt, die eine magnetische Kraft auf die Schaltmuffe ausübt. Bei derartigen Kupplungen kann die Schaltmuffe ausgehend von einer Auskupplungsposition in entgegengesetzte Richtungen bewegt werden, um die Schaltmuffe in Eingriff mit unterschiedlichen, axial beabstandeten Kupplungskörpern zu bringen.

Bei den Kupplungen gemäß dem Stand der Technik kann es beim Auskuppeln, wenn die Schaltmuffe aus einer Einkupplungsposition in die Auskupplungsposition zurückbewegt wird, zum Überschwingen der Schaltmuffe kommen. Das bedeutet, dass sich die Schaltmuffe über die Auskupplungsposition hinweg bewegt, sodass es ungewollt zu einem Eingriff der Schaltmuffe mit dem entgegengesetzten Kupplungskörper kommen kann, wobei kurzzeitig ein Drehmoment übertragen wird.

Die US 2021/0190150 A1 offenbart eine elektromagnetische Kupplung. Diese umfasst eine Welle, auf der ein Kupplungskörper drehfest angeordnet ist, einen rotierbar gelagerten Kupplungskörper, und eine verschiebbar gelagerte Schaltmuffe. Durch Verschieben der Schaltmuffe kann der Kupplungskörper über das Kupplungselement drehmomentübertragend mit der Welle gekoppelt werden.

Die EP 4 459 149 A1 offenbart eine elektromagnetische Kupplung mit zwei axial beabstandeten Kupplungskörpern, einer Schaltmuffe und einer Haltevorrichtung in Form eines Federrings.

Es ist daher eine Aufgabe der vorliegenden Erfindung, eine verbesserte elektromagnetische Kupplung anzugeben, bei der ein Überschwingen der Schaltmuffe auf einfache Weise verhindert wird.

Diese Aufgabe wird erfindungsgemäß gelöst durch eine elektromagnetische Kupplung, mit einer Schaltmuffe, die drehfest auf einer Welle angeordnet ist und entlang der Welle linear zwischen einer ersten Einkupplungsposition, einer zweiten Einkupplungsposition und einer zwischen den Einkupplungspositionen liegenden Auskupplungsposition verschiebbar ist, einem ersten Kupplungskörper und einem zweiten Kupplungskörper, die axial voneinander beabstandet sind und jeweils koaxial zur Welle ausgerichtet sind, wobei jeder Kupplungskörper eine Innenverzahnung aufweist, und einem Stator mit einer ersten und einer zweiten bestrombaren Spule zur direkten oder indirekten Verstellung der Schaltmuffe entlang der Welle. Die Schaltmuffe hat eine erste Verzahnung zum Eingriff in die Innenverzahnung des ersten Kupplungskörpers in der ersten Einkupplungsposition und eine zweite Verzahnung zum Eingriff in die Innenverzahnung des zweiten Kupplungskörpers in der zweiten Einkupplungsposition. Des Weiteren umfasst die elektromagnetische Kupplung eine Sperreinrichtung, die bei einer Verschiebung der Schaltmuffe aus einer Einkupplungsposition in Richtung der Auskupplungsposition eine Bewegung der Schaltmuffe über die Auskupplungsposition hinweg in Richtung der weiteren Einkupplungsposition verhindert. Die Kupplung umfasst eine Halteeinrichtung, die eingerichtet ist, die Schaltmuffe in unbestromtem Zustand der Spulen in der Auskupplungsposition oder in der Einkupplungsposition zu halten.

Mittels der Sperreinrichtung wird beim Auskuppeln ein Überschwingen der Schaltmuffe über die Auskupplungsposition hinaus vermieden, wodurch sichergestellt wird, dass die Schaltmuffe nicht mit dem weiteren Kupplungskörper in Eingriff kommt.

In der Einkupplungsposition liegt insbesondere ein Formschluss zwischen der Schaltmuffe und einer der beiden Kupplungskörper vor.

Wenn die Schaltmuffe in der Auskupplungsposition ist, wird kein Drehmoment übertragen. Die Auskupplungsposition stellt somit eine Neutralstellung dar.

Die Kupplung lässt mittels der Halteeinrichtung besonders energieeffizient betreiben, da nur zum aktiven Verschieben der Schaltmuffe eine magnetisch wirksame Schaltkraft erforderlich ist. Anders ausgedrückt wird durch die Halteeinrichtung ein unbeabsichtigtes Verschieben ohne Betätigung des Ankers vermieden.

Die Sperreinrichtung umfasst beispielsweise ein Sperrelement, das ein zwischen einer Freigabeposition und einer Sperrposition radial verschiebbarer Bolzen ist. Ein derartiges Sperrelement ist einfach umsetzbar und dadurch kostengünstig, während gleichzeitig eine Bewegung der Schaltmuffe zuverlässig blockiert werden kann.

Insbesondere wird ein Überschwingen der Schaltmuffe mittels des Sperrelements mechanisch verhindert, sodass keine aufwendige Positionsregelung erforderlich ist.

Indem die Schaltmuffe durch einen mechanischen Anschlag blockiert wird, sind geringe Schaltzeiten möglich. Anders ausgedrückt ist die Ansteuerung zum Einkuppeln und Auskuppeln vereinfacht.

Beispielsweise weist die elektromagnetische Kupplung mehrere umfangsmäßig verteilte Sperrelemente auf. Dadurch können die einzelnen Sperrelemente kleiner ausgebildet sein als bei Vorhandensein eines einzigen Sperrelements, wodurch insgesamt eine kompakte Bauweise der elektromagnetischen Kupplung erreicht wird.

Das Sperrelement ist beispielsweise mittels eines elastischen Elements in die Freigabeposition beaufschlagt. Auf diese Weise wird sichergestellt, dass eine Verschiebung der Schaltmuffe nicht unbeabsichtigt blockiert wird. Zudem lässt sich das Sperrelement ohne Energieaufwand in die Freigabeposition zurückbewegen.

Das Sperrelement kann bei einer Bewegung der Schaltmuffe von der Auskupplungsposition in eine Einkupplungsposition entgegen der Federkraft des elastischen Elements in die Sperrposition bewegt werden. Dadurch befindet sich das Sperrelement bereits in der Sperrposition, wenn die Schaltmuffe in der Einkupplungsposition ist, sodass bei einem nachfolgend stattfindenden Auskupplungsvorgang das Sperrelement eine Bewegung über die Auskupplungsposition hinaus zuverlässig blockiert.

Vorzugsweise ist das Sperrelement in der Schaltmuffe radial verschiebbar gelagert. Das Sperrelement bewegt sich folglich bei einer Betätigung der Kupplung zusammen mit der Schaltmuffe in einer Richtung entlang der Welle. Somit ist es möglich, die Schaltmuffe in einer von der Auskupplungsposition abweichenden Stellung zu verriegeln.

Beispielsweise ist in der Schaltmuffe eine Aussparung vorhanden, durch die sich das Sperrelement erstreckt.

Insbesondere ist die Schaltmuffe mittig geteilt und die beiden Teile der Schaltmuffe sind durch einen Verbindungsring axial aneinander befestigt, wobei das Sperrelement in dem Verbindungsring radial verschiebbar geführt ist. Der Verbindungsring hat somit eine Doppelfunktion als Fixierungselement sowie als Führungselement. Auf diese Weise wird eine kompakte Bauform der Kupplung erreicht. Indem die Schaltmuffe mittig geteilt ist, lässt sich diese kostengünstig herstellen, da die einzelnen Bestandteile ein geringeres Volumen haben.

Die beiden Teile der Schaltmuffe sind vorzugsweise identisch.

Gemäß einer Ausführungsform umfasst die Kupplung einen Anker, der mit der Schaltmuffe gekoppelt ist, wobei der Anker durch Bestromen der ersten oder der zweiten Spule des Stators entlang der ersten Welle verschiebbar ist. Die Verschiebung der Schaltmuffe durch die Spulen erfolgt somit indirekt mittels des Ankers. Dadurch kann das Material der Schaltmuffe unabhängig von dessen magnetischen Eigenschaften gewählt werden. Genauer gesagt können die drehmomentübertragenden Bauteile beispielsweise gehärtet werden, ohne dass dabei Rücksicht auf die magnetischen Eigenschaften der Schaltmuffe genommen werden muss. Die drehmomentübertragenden Teile können insbesondere vom Anker magnetisch entkoppelt sein.

Der Anker kann mehrteilig ausgebildet sein und beispielsweise einen magnetischen Kern sowie ein mit dem Kern fest verbundenes Mitnahmeelement aus Kunststoff haben. Dies trägt ebenfalls zu einer kostengünstigen Fertigung der Kupplung bei.

Der Anker ist vorzugsweise mittels des Sperrelements mit der Schaltmuffe in Bewegungsrichtung lösbar gekoppelt. Lösbar gekoppelt bedeutet in diesem Fall, dass zwischen dem Anker und der Schaltmuffe eine Relativbewegung in Richtung entlang der Welle möglich ist, insbesondere dass der Anker relativ zur Schaltmuffe begrenzt verschiebbar ist. Durch die lösbare Koppelung hat die Schaltmuffe einen größeren Bewegungsspielraum, wodurch eine besonders große Überdeckung der Schaltmuffe mit den Kupplungskörpern möglich ist.

Der Anker kann mit der Schaltmuffe über zwei elastische Federelemente gekoppelt sein, die an entgegengesetzten axialen Flächen des Ankers anliegen und jeweils mit einem vom Anker abgewandten Ende an der Schaltmuffe anliegen. Der Anker ist insbesondere durch die Federelemente in der Schaltmuffe eingespannt. Die Federelemente bewirken hierbei eine Rückstellkraft auf den Anker, sodass nach einer Verschiebung der Schaltmuffe relativ zum Anker, bei der eines der Federelemente komprimiert wird, dieser durch die elastische Kraft des komprimierten Federelements in eine Mittellage zurückgestellt werden kann.

In Zusammenhang mit dieser Ausführungsform kommt auch die zweiteilige Fertigung der Schaltmuffe positiv zum Tragen. Insbesondere lassen sich der Anker und die Federelemente in die Schaltmuffe einlegen, bevor die Teile der Schaltmuffe durch den Verbindungsring miteinander verbunden werden.

Federelement ist beispielsweise eine Tellerfeder oder ein Wellenring oder ein Paket aus diesen.

An dem Anker kann eine Mitnahmegeometrie zur formschlüssigen Koppelung des Ankers mit dem Sperrelement vorhanden sein, wobei die Mitnahmegeometrie eine Abstufung oder eine Abschrägung hat, die derart ausgebildet ist, dass sich das Sperrelement bei einer Verschiebung der Schaltmuffe relativ zum Anker durch eine Bewegung entlang der Abstufung oder der Abschrägung aus der Freigabeposition in die Sperrposition bewegt oder umgekehrt. Die Bewegung des Sperrelements wird folglich mechanisch durch die Geometrie des Ankers bewirkt, sodass kein zusätzlicher Antrieb zur Verstellung des Sperrelements notwendig ist, was zu einer kompakten und kostengünstigen Bauweise der Kupplung beiträgt.

Das Sperrelement kann sich bei einer Bewegung aus der Freigabeposition in die Sperrposition aus der Mitnahmegeometrie herausbewegen oder in der Mitnahmegeometrie verbleiben.

Durch die formschlüssige Koppelung des Ankers mit dem Sperrelement ist der Anker mittels des Sperrelements auch mit der Schaltmuffe gekoppelt, in der das Sperrelement radial gelagert ist.

An der Außenseite der ersten Welle ist beispielsweise eine Führungsfläche vorhanden, wobei mittig an der Führungsfläche ein Sperrzahn angeordnet ist, an dem das Sperrelement bei einer Bewegung aus der Einkupplungsposition in die Auskupplungsposition anschlägt. Durch einen derartigen Sperrzahn ist auf einfache Weise ein mechanischer Anschlag realisiert.

Das Sperrelement hat an dem zur Welle hin gerichteten Ende beispielsweise eine zahnförmige Spitze.

Die Halteeinrichtung ist insbesondere eine mechanische Halteeinrichtung.

Beispielsweise hat die Halteeinrichtung mindestens ein in der Welle gelagertes, elastisch gegen die Schaltmuffe beaufschlagtes Halteelement, und die Schaltmuffe hat im Bereich des Halteelements drei axial voneinander beabstandete Vertiefungen, wobei das Halteelement in einer Einkupplungsposition oder der Auskupplungsposition der Schaltmuffe zumindest abschnittweise in eine entsprechende Vertiefung hineinragt. Das mindestens eine Halteelement sichert die Schaltmuffe somit gegen eine unbeabsichtigte Verschiebung, während eine Bewegung der Schaltmuffe ungehindert möglich ist, wenn auf die Schaltmuffe eine Kraft in Bewegungsrichtung beaufschlagt wird, die größer ist, als die Haltekraft des Halteelements.

Das Halteelement ist beispielsweise eine an der Schaltmuffe anliegende Kugel, die mittels eines Federelements gegen die Schaltmuffe beaufschlagt ist.

Zumindest eine der Vertiefungen kann in einem Längsschnitt durch die Schaltmuffe betrachtet eine dreieckige Kontur haben. Durch eine derartige Kontur ist es möglich, dass das Halteelement eine Rückstellkraft auf die Schaltmuffe bewirkt, sobald das Halteelement in der Vertiefung angeordnet ist. Alternativ ist auch eine halbrunde Kontur der Vertiefung möglich.

Gemäß einer Ausführungsform kann die Sperreinrichtung eine Steuereinheit umfassen, die eingerichtet ist, eine Bestromung der ersten Spule und der zweiten Spule derart zu regeln, dass bei einer Verschiebung der Schaltmuffe aus einer Einkupplungsposition in Richtung der Auskupplungsposition eine Bewegung der Schaltmuffe über die Auskupplungsposition hinweg in Richtung der weiteren Einkupplungsposition verhindert ist. Auf diese Weise lässt sich eine Position der Schaltmuffe rein über die magnetischen Kräfte der beiden Spulen einregeln. Die mechanischen Sperrflächen können entfallen. Das Sperrelement kann auch bei dieser Ausführungsform vorhanden sein, es dient jedoch in diesem Fall lediglich der Koppelung des Ankers mit der Schaltmuffe und hat keine Sperrfunktion.

Die Aufgabe wird des Weiteren erfindungsgemäß gelöst durch ein Verfahren zum Betätigen einer erfindungsgemäßen elektromagnetischen Kupplung. In einem ersten Verfahrensschritt wird, während die Schaltmuffe in einer Auskupplungsposition ist, die erste oder die zweite Spule bestromt, wodurch die Schaltmuffe in Richtung der entsprechenden Einkupplungsposition bewegt wird. Während der Bewegung der Schaltmuffe von der Auskupplungsposition in eine Einkupplungsposition insbesondere spätestens bei Erreichen der Einkupplungsposition, wird das Sperrelement in radialer Richtung aus einer Freigabeposition in eine Sperrposition bewegt. Bei einer anschließenden Bewegung der Schaltmuffe aus der Einkupplungsposition heraus in Richtung der Auskupplungsposition durch Bestromen der weiteren Spule wird eine Bewegung der Schaltmuffe in die Auskupplungsposition durch das Sperrelement blockiert.

Wie bereits in Zusammenhang mit der erfindungsgemäßen Kupplung erläutert, wird dadurch verhindert, dass sich die Schaltmuffe beim Auskuppeln über die Auskupplungsposition hinaus bewegt.

Die Bewegung der Schaltmuffe wird vorzugsweise zum einen durch eine durch die Spulen bewirkte Magnetkraft und zum anderen durch ein Drehmoment bewirkt. Insbesondere wird, sobald eine Überdeckung der Schaltmuffe mit einem Kupplungskörper vorhanden ist, durch das auf die Schaltmuffe wirkende Drehmoment eine Kraft in Verschieberichtung erzeugt, wodurch eine größere Überdeckung mit dem Kupplungskörper erreicht wird. Genauer gesagt kann durch die Kombination aus magnetischer und mechanischer Schaltkraft ein größerer Schaltweg erreicht werden, wodurch die Drehmomentkapazität der Kupplung verbessert ist.

Durch eine erneute Bestromung der zur Bewegung der Schaltmuffe in die Einkupplungsposition bestromten ersten oder zweiten Spule kann das Sperrelement in eine Freigabestellung bewegt werden, wodurch die Schaltmuffe in die Auskupplungsposition zurückkehren kann. Indem ein Stromimpuls zum Lösen der Verriegelung notwendig ist, wird sichergestellt, dass sich das Sperrelement nicht unbeabsichtigt in die Freigabeposition zurückbewegen kann, wodurch die Verriegelung besonders zuverlässig ist.

In einer alternativen Ausführungsform kann nach dem Bestromen der weiteren Spule die Bestromung eingestellt werden, wodurch sich der Anker in seine Ausgangsposition zurückbewegt, und wobei sich das Sperrelement in die Freigabestellung zurückbewegen kann. Das heißt, dass beim Auskuppeln, solange die Spule zur Bewegung des Ankers bzw. der Schaltmuffe bestromt wird, das Sperrelement in der Sperrposition verbleibt, wodurch die Bewegung der Schaltmuffe in die Auskupplungsposition zunächst verhindert wird. Sobald die Bestromung eingestellt wird, kann sich das Sperrelement, ohne dass ein weiterer Stromimpuls notwendig ist, in die Freigabestellung und die Schaltmuffe und die Auskupplungsposition zurückbewegen.

Sofern die elektromagnetische Kupplung eine wie vorhergehend beschriebene Halteeinrichtung umfasst, kann eine Rückstellung der Schaltmuffe in die Auskupplungsposition durch die Halteeinrichtung erfolgen, insbesondere indem das Halteelement durch die Beaufschlagung gegen eine geneigte Fläche der im Längsschnitt dreieckigen Vertiefung der Schaltmuffe drückt. Dies trägt ebenfalls zu einem energieeffizienten Betrieb der elektromagnetischen Kupplung bei.

Eine Bewegung des Sperrelements aus der Sperrposition in die Freigabeposition erfolgt beispielsweise bei der Bewegung der Schaltmuffe in die Auskupplungsposition.

Alternativ kann das Sperrelement aus der Sperrposition in die Freigabeposition bewegt werden, bevor die Schaltmuffe in die Auskupplungsposition bewegt wird.

Die Aufgabe wird des Weiteren erfindungsgemäße gelöst durch ein Verfahren zum Betätigen einer erfindungsgemäßen elektromagnetischen Kupplung, die eine Steuereinheit umfasst. Während die Schaltmuffe in einer Auskupplungsposition ist, wird zunächst die erste oder die zweite Spule bestromt, wodurch die Schaltmuffe in Richtung der entsprechenden Einkupplungsposition bewegt wird. Bei einer anschließenden Bewegung der Schaltmuffe aus der Einkupplungsposition heraus in Richtung der Auskupplungsposition regelt die Steuereinheit eine Bestromung der ersten Spule und der zweiten Spule derart, dass bei einer Verschiebung der Schaltmuffe aus einer Einkupplungsposition in Richtung der Auskupplungsposition eine Bewegung der Schaltmuffe über die Auskupplungsposition hinweg in Richtung der weiteren Einkupplungsposition verhindert ist. Zur Durchführung eines derartigen Verfahrens sind keine mechanischen Sperrelemente erforderlich.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 eine erfindungsgemäße elektromagnetische Kupplung in einer Explosionsdarstellung,
- Figur 2 eine perspektivische Schnittdarstellung durch eine Schaltmuffe und einen Anker der elektromagnetischen Kupplung aus Figur 1,
- Figur 3 eine weitere perspektivische Schnittdarstellung durch die Schaltmuffe und den Anker der elektromagnetischen Kupplung aus Figur 2,
- Figur 4 einen Längsschnitt durch die Kupplung aus Figur 1 im Bereich einer Halteeinrichtung in einer Neutralstellung der Kupplung,
- Figur 5 einen Längsschnitt durch die Kupplung aus Figur 1 im Bereich des Sperrelements in einer Neutralstellung der Kupplung,
- Figur 6 einen Längsschnitt durch die Kupplung aus Figur 1 im Bereich einer Halteeinrichtung in einem eingekuppelten Zustand,
- Figur 7 einen Längsschnitt durch die Kupplung aus Figur 1 im Bereich des Sperrelements während eines Einkupplungsvorgangs,
- Figur 8 einen Längsschnitt durch die Kupplung aus Figur 1 im Bereich des Sperrelements in einem eingekuppelten Zustand,
- Figur 9 einen Längsschnitt durch die die Kupplung aus Figur 1 im Bereich des Sperrelements bei einem Auskupplungsvorgang,
- Figur 10 einen Querschnitt durch die Kupplung aus Figur 1,
- Figur 11 schematisch eine Schnittdarstellung im Bereich der Halteeinrichtung,
- Figur 12 eine perspektivische Schnittdarstellung durch eine Schaltmuffe, einen Stator und einen Anker einer elektromagnetischen Kupplung gemäß einer weiteren erfindungsgemäßen Ausführungsform,
- Figur 13 einen Längsschnitt durch eine erfindungsgemäße Kupplung mit der Schaltmuffe, dem Stator und dem Anker aus Figur 12 im Bereich einer Halteeinrichtung in einer Neutralstellung der Kupplung,
- Figur 14 einen Längsschnitt durch die Kupplung aus Figur 13 im Bereich eines Verbindungsrings in einer Neutralstellung der Kupplung,
- Figur 15 einen Längsschnitt durch die Kupplung aus Figur 13 im Bereich eines Sperrelements in einer Neutralstellung der Kupplung,
- Figur 16 einen Längsschnitt durch die Kupplung aus Figur 13 im Bereich der Halteeinrichtung in einem eingekuppelten Zustand,
- Figur 17 einen Längsschnitt durch die Kupplung aus Figur 13 im Bereich des Verbindungsrings in einem eingekuppelten Zustand,
- Figur 18 einen Längsschnitt durch die Kupplung aus Figur 13 im Bereich des Sperrelements in einem eingekuppelten Zustand,
- Figur 19 einen Querschnitt durch die Kupplung gemäß Figur 13,
- Figur 20 eine schematische Schnittdarstellung der Kupplung aus Figur 13 in einer Neutralstellung,
- Figur 21 eine schematische Schnittdarstellung der Kupplung aus Figur 13 während eines Einkupplungszustands,
- Figur 22 eine schematische Schnittdarstellung der Kupplung aus Figur 13 in eingekuppeltem Zustand,
- Figur 23 eine schematische Schnittdarstellung der Kupplung aus Figur 13 während eines Auskupplungsvorgangs,
- Figur 24 eine schematische Schnittdarstellung der Kupplung aus Figur 13 in einem ausgekuppelten Zustand,
- Figur 25 eine perspektivische Schnittdarstellung einer elektromagnetischen Kupplung gemäß einer weiteren erfindungsgemäßen Ausführungsform,
- Figur 26 einen Längsschnitt durch die Kupplung aus Figur 25 in einer Neutralstellung, und
- Figur 27 einen Längsschnitt durch die Kupplung aus Figur 25 in eingekuppeltem Zustand.

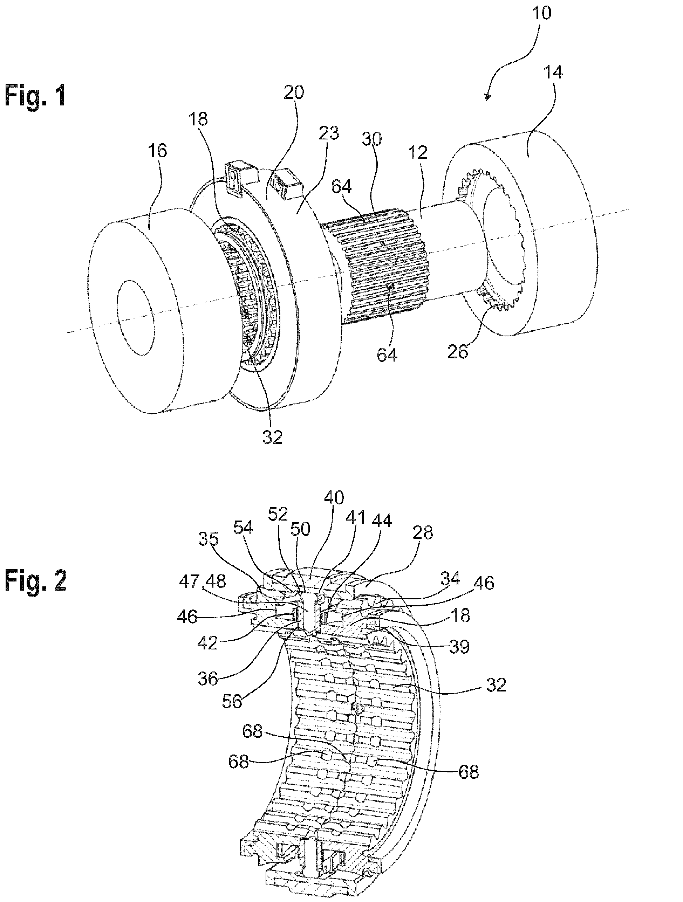

Figur 1 zeigt eine elektromagnetische Kupplung 10.

Die Kupplung 10 umfasst eine Welle 12, einen ersten Kupplungskörper 14, einen zweiten Kupplungskörper 16, eine Schaltmuffe 18 und einen Stator 20.

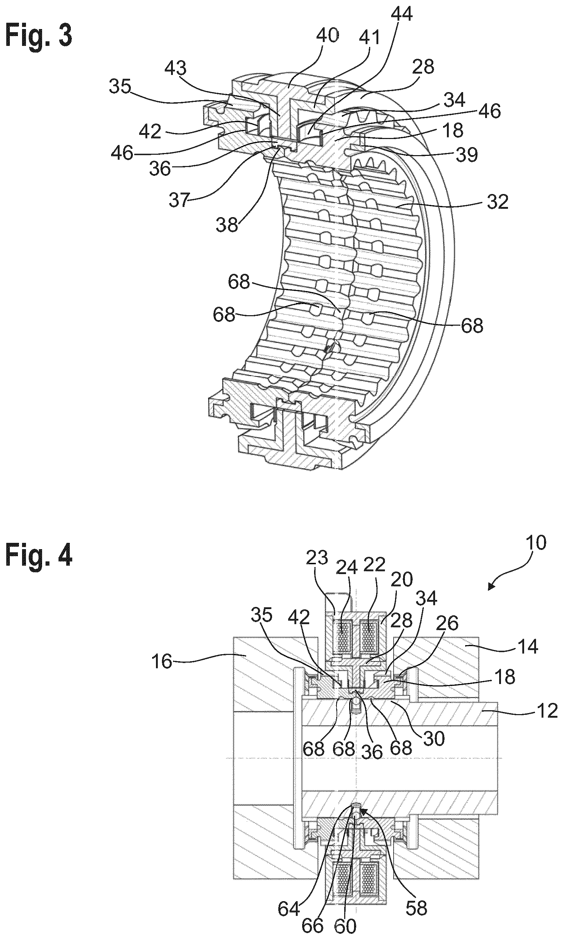

Im Stator 20 sind eine erste bestrombare Spule 22 und eine zweite bestrombare Spule 24 untergebracht, die in Figur 4 zu sehen sind. Zudem umfasst der Stator 20 einen Stahlkörper 23, der zusammen mit den Spulen 22, 24 einen Elektromagnet bildet.

Durch Bestromen der Spulen 22, 24 kann eine Schaltkraft bewirkt werden.

Die Kupplungskörper 14, 16 sind axial voneinander beabstandet und jeweils koaxial zur Welle 12 ausgerichtet. Dies wird anhand der Schnittdarstellungen in den Figuren 4 bis 9 deutlich.

Jeder Kupplungskörper 14, 16 weist eine Innenverzahnung 26 auf.

Die Schaltmuffe 18 ist drehfest auf der Welle 12 angeordnet und entlang der Welle 12 linear zwischen einer ersten Einkupplungsposition, einer zweiten Einkupplungsposition und einer zwischen den Einkupplungspositionen liegenden Auskupplungsposition verschiebbar. Die verschiedenen Positionen werden nachfolgend noch näher erläutert.

Die Verschiebung der Schaltmuffe 18 erfolgt im Ausführungsbeispiel indirekt mittels eines Ankers 28, der in den Figuren 2 bis 10 zu sehen ist. Der Anker 28 lässt sich durch Bestromung der Spulen 22, 24 axial verschieben. Insbesondere wird durch das bei der Bestromung einer oder beider Spulen 22, 24 erzeugte Magnetfeld eine Kraft auf den Anker 28 erzeugt.

Es ist jedoch auch denkbar, dass die Schaltmuffe 18 direkt durch Bestromung der Spulen 22, 24 verschoben werden kann.

Im Ausführungsbeispiel hat die Welle 12 eine Außenverzahnung 30, die in Eingriff mit einer Innenverzahnung 32 der Schaltmuffe 18 ist.

An ihren entgegengesetzten Enden hat die Schaltmuffe 18 jeweils eine erste Verzahnung 34 und eine zweite Verzahnung 35, die jeweils als Außenverzahnung ausgebildet sind. Diese dient zum drehmomentübertragenden Eingriff in die Innenverzahnung 26 der Kupplungskörper 14, 16, um zwischen der Schaltmuffe 18 und den Kupplungskörpern 14, 16 ein Drehmoment zu übertragen, wenn die Schaltmuffe 18 in einer Einkupplungsposition ist.

Die erste Verzahnung 34 und die zweite Verzahnung 35 sind insbesondere Klauenverzahnungen.

Die Verzahnungen 32, 34, 35 der Schaltmuffe 18 sind deutlicher in den Figuren 2 und 3 zu sehen, die jeweils eine perspektivische Schnittdarstellung der Schaltmuffe 18 mit dem Anker 28 zeigen.

Anhand der Figuren 2 und 3 werden im Folgenden die Schaltmuffe 18 und der Anker 28 sowie deren Koppelung im Detail beschrieben.

Die Schaltmuffe 18 ist im Ausführungsbeispiel zweiteilig ausgebildet. Insbesondere ist die Schaltmuffe 18 mittig geteilt, wobei die beiden Teile der Schaltmuffe 18 identisch sind.

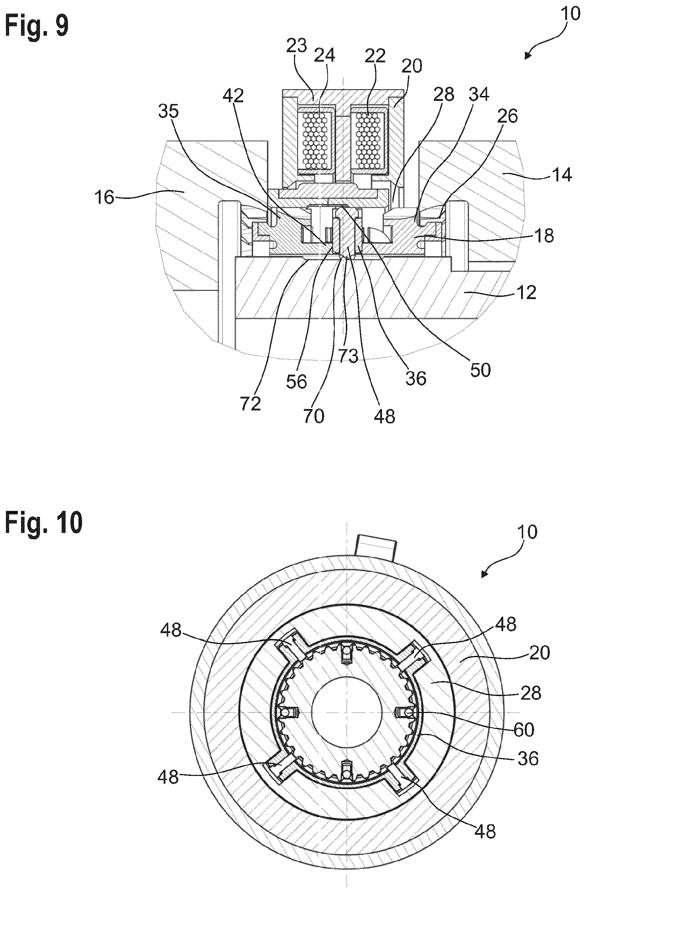

Die beiden Teile der Schaltmuffe 18 sind durch einen Verbindungsring 36 (siehe Figur 3) axial aneinander befestigt. Der Verbindungsring 36 ist auch in Figur 10 sichtbar, die einen Querschnitt durch die Kupplung 10 zeigt.

Insbesondere sind am Verbindungsring 36 und an den Teilen der Schaltmuffe 18 Rastnasen 37, 38 vorhanden, über die der Verbindungsring 36 in Eingriff mit den Teilen der Schaltmuffe 18 gehalten ist.

An den axialen Enden der Schaltmuffe 18 ist jeweils ein insbesondere ringförmiges Abschirmelement 39 angeordnet, welches sicherstellt, dass die Schaltmuffe 18 nicht magnetisch an den Kupplungskörpern 14, 16 haften bleibt. Die Abschirmelemente 39 können aus Edelstahl oder einem Kunststoffmaterial gebildet sein.

Der Anker 28 ist ebenfalls mehrteilig ausgebildet und hat einen ferromagnetischen Kern 40, der zumindest abschnittsweise von einer Ummantelung 41 umgeben ist. Die Ummantelung 41 ist beispielsweise aus Kunststoff gebildet und dient als magnetische Barriere zu den weiteren Kupplungsbauteilen.

Im Querschnitt betrachtet ist der Anker 28 abschnittsweise, insbesondere größtenteils T-förmig ausgebildet. Anders ausgedrückt hat der Anker 28 einen sich zur Schaltmuffe 18 hin erstreckenden Steg 43 (siehe Figur 3).

Insgesamt betrachtet ist der Anker 28 ringförmig, wie in Figur 10 zu sehen ist.

Der Anker 28 ist auf den Verzahnungen 34, 35 der Schaltmuffe 18 geführt.

Der Anker 28 ist mit der Schaltmuffe 18 über zwei elastische Federelemente 42 gekoppelt.

Die Federelemente 42 liegen an entgegengesetzten axialen Flächen des Ankers 28 an, genauer gesagt an entgegengesetzten Flächen des Stegs 43.

Mit einem vom Anker 28 abgewandten Ende liegen die Federelemente 42 jeweils an der Schaltmuffe 18 an.

Somit ist der Anker 28 mit der Schaltmuffe 18 in axialer Richtung gekoppelt, wobei zwischen dem Anker 28 und der Schaltmuffe 18 durch Komprimierung der Federelemente 42 eine Relativbewegung in axialer Richtung möglich ist. Anders ausgedrückt ist der Anker 28 lösbar mit der Schaltmuffe 18 gekoppelt.

Im Ausführungsbeispiel sind die Federelemente 42 durch ein Paket aus Wellenfedern gebildet.

Um eine Relativbewegung des Ankers 28 relativ zur Schaltmuffe 18 zu ermöglichen, hat die Schaltmuffe 18 eine umlaufende Vertiefung 44, siehe Figur 3, wobei sich der Steg 43 des Ankers 28 in die Vertiefung 44 hinein erstreckt.

An den axialen Endflächen der Vertiefung 44 ist jeweils eine umlaufende Nut 46 vorgesehen, die zur Positionierung der Federelemente 42 dient. Konkret sind die Federelemente 42 jeweils abschnittsweise in einer Nut 46 angeordnet, sodass die Federelemente 42 in zusammengesetztem Zustand der Schaltmuffe 18 an dieser gegen Herausrutschen gesichert sind.

Wie beispielsweise anhand der Schnittdarstellung in Figur 2 dargestellt ist, hat die Kupplung 10 eine Sperreinrichtung 47 mit mehrere Sperrelementen 48, die im Ausführungsbeispiel als Bolzen ausgebildet sind.

Beispielsweise sind vier umfangsmäßig verteilte Sperrelemente 48 vorhanden (siehe auch Figur 10).

Das Sperrelement 48 hat den Zweck, bei einer Verschiebung der Schaltmuffe 18 aus einer Einkupplungsposition in Richtung der Auskupplungsposition eine Bewegung der Schaltmuffe 18 über eine Auskupplungsposition hinaus zu blockieren, insbesondere mechanisch zu blockieren, was im Folgenden anhand der Beschreibung zur Betriebsweise der Kupplung 10 noch detailliert beschrieben wird.

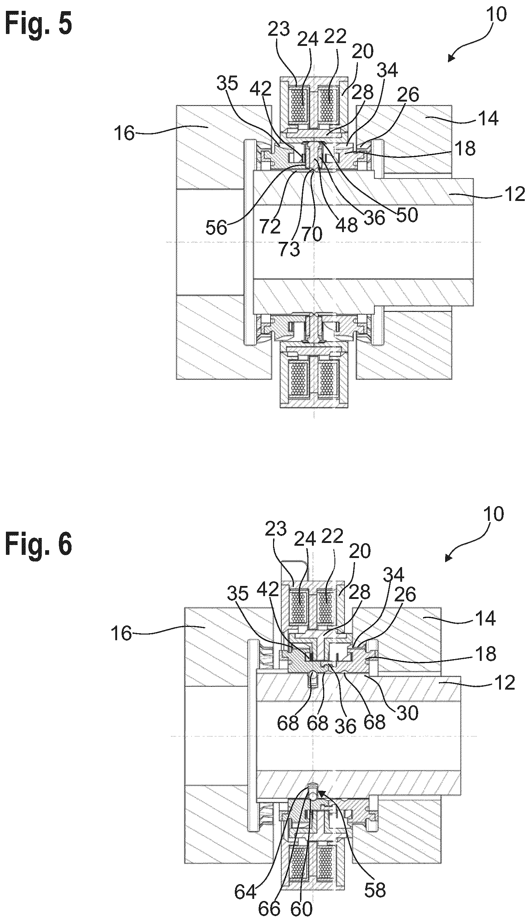

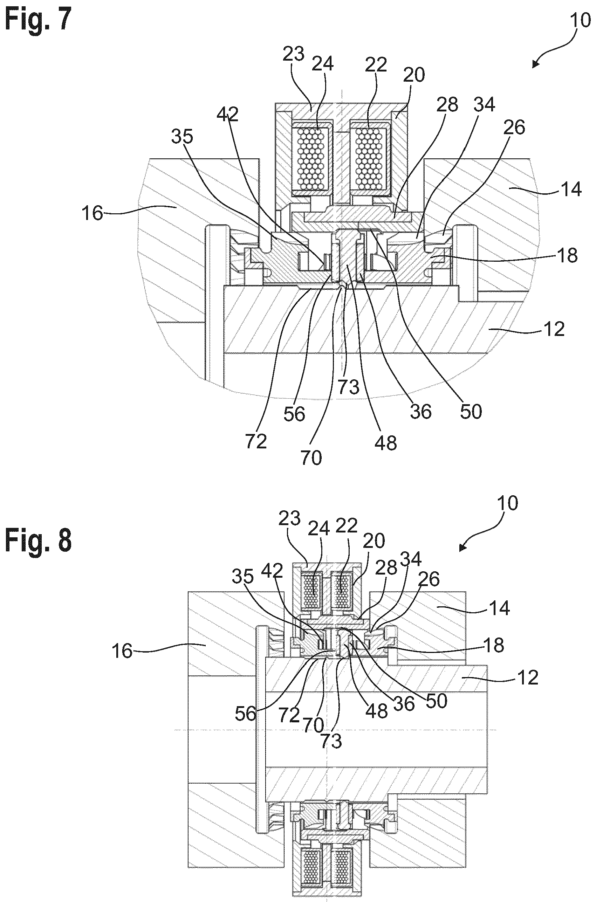

Zu diesem Zweck ist das Sperrelement 48 zwischen einer Freigabeposition (siehe Figuren 2 und 5) und einer Sperrposition (siehe Figuren 8 und 9) radial verschiebbar.

An dem Anker 28 ist eine Mitnahmegeometrie 50 zur formschlüssigen Koppelung des Ankers 28 mit dem Sperrelement 48 vorhanden (siehe Figuren 2 und 5 bis 9).

Im Ausführungsbeispiel ist die Mitnahmegeometrie 50 eine Vertiefung 52 an einer Innenseite des Ankers 28, wobei das Sperrelement 48 in der Freigabeposition mit einem Ende in der Vertiefung 52 angeordnet ist, wie in Figur 2 dargestellt ist.

Die Mitnahmegeometrie 50 hat im Ausführungsbeispiel eine Abschrägung 54.

Die Sperrelemente 48 sind in der Schaltmuffe 18, genauer gesagt im Verbindungsring 36 verschiebbar geführt.

In der Schaltmuffe 18 sind entsprechende Aussparungen 56 vorhanden, durch die sich das Sperrelement 48 hindurch erstrecken kann, insbesondere wenn das Sperrelement 48 in die Sperrposition bewegt wird.

In der Schnittdarstellung in Figur 4 ist zu sehen, dass die Kupplung 10 des Weiteren eine Halteeinrichtung 58 umfasst.

Die Halteeinrichtung 58 ist eingerichtet, die Schaltmuffe 18 im unbestromten Zustand der Spulen 22, 24 in der Auskupplungsposition oder in der Einkupplungsposition zu halten.

Zu diesem Zweck umfasst die Halteeinrichtung 58 mehrere in der Welle 12 gelagerte, elastisch gegen die Schaltmuffe 18 beaufschlagte Halteelemente 60.

Die Halteelemente 60 sind im Ausführungsbeispiel Kugeln, die jeweils in einer radialen Vertiefung 64 in der Welle 12 angeordnet sind und ein Stück weit aus dieser herausragen, wenn die Schaltmuffe 18 in einer Einkupplungsposition oder in der Auskupplungsposition ist.

Dabei sind die Halteelemente 60 jeweils mittels eines Federelements 66 in Richtung zur Schaltmuffe 18 hin beaufschlagt.

Die Schaltmuffe 18 hat im Bereich der Halteelemente 60 drei axial voneinander beabstandete Vertiefungen 68.

Die Halteelemente 60 ragen in einer Einkupplungsposition oder der Auskupplungsposition der Schaltmuffe 18 zumindest abschnittweise in eine entsprechende Vertiefung 68 hinein.

Während sich die Schaltmuffe 18 von der Auskupplungsposition in eine Einkupplungsposition bewegt, werden die Halteelemente 60 entgegen der Federkraft weiter in die Vertiefungen 64 in der Welle 12 hinein gedrückt, sodass eine axiale Bewegung der Schaltmuffe 18 freigegeben wird.

Die Halteelemente 60 sind umfangsmäßig versetzt zu den Sperrelementen 48 angeordnet, wie in Figur 10 zu sehen ist.

Eine der Vertiefungen 68, insbesondere die mittlere Vertiefung 68, in die das Halteelement 60 in der Auskupplungsposition der Schaltmuffe 18 eingreift, hat in einem Längsschnitt durch die Schaltmuffe 18 betrachtet eine dreieckige Kontur.

Nachfolgend wird anhand der Figuren 4 bis 9 eine Funktionsweise der Kupplung 10, insbesondere ein Verfahren zum Betätigen der elektromagnetischen Kupplung 10 beschrieben.

Die Figuren 4 und 5 zeigen die Kupplung 10 jeweils in einer Neutralstellung, in der die Schaltmuffe 18 in der Auskupplungsposition ist.

Das Sperrelement 48 befindet sich in einer Freigabeposition, insbesondere wobei das Sperrelement 48 mittig oberhalb eines Sperrzahns 70 angeordnet ist.

Der Sperrzahn 70 ist mittig an einer Führungsfläche 72 angeordnet, welche an der Außenseite der Welle 12 vorhanden ist.

Die Höhe des Sperrzahns 70 ist derart gewählt, dass sich das Sperrelement 48 in seiner Freigabeposition bei einer axialen Bewegung über den Sperrzahn 70 hinweg bewegen kann und in seiner Sperrposition bei einer axialen Bewegung an dem Sperrzahn 70 anstößt.

Das Sperrelement 48 hat beispielsweise an seinem zur Welle 12 hin gerichteten Ende eine zahnförmige Spitze 73. Anders ausgedrückt hat das Sperrelement 48 eine Abflachung in Richtung des Sperrzahns 70.

Die Führungsfläche 72 ist insbesondere gebildet, indem ein Längszahn der Welle 12 abschnittsweise entfernt, beispielsweise abgefräst ist.

Der Anker 28 befindet sich in der Neutralstellung mittig über der Schaltmuffe 18 sowie mittig zwischen den Kupplungskörpern 14, 16.

Wird die Kupplung 10 geschalten, beispielsweise durch Bestromen der ersten Spule 22, wird eine magnetische Kraft auf den Anker 28 ausgeübt, der sich infolge dessen verschiebt, im Ausführungsbeispiel nach rechts (siehe Figur 6).

Der Kupplungskörper 14 dient dabei als Anschlag, um einen Verschiebeweg des Ankers 28 zu begrenzen.

Durch die Verschiebung des Ankers 28 wird die Schaltmuffe 18 entsprechend verschoben, sodass die Verzahnung 34 der Schaltmuffe 18 in Eingriff mit der Innenverzahnung 26 des Kupplungskörpers 14 gelangt.

Die Verschiebung wird zum einen durch eine auf den Anker 28 wirkende Magnetkraft und zum anderen durch ein auf die Schaltmuffe 18 wirkendes Drehmoment erreicht.

Figur 7 veranschaulicht insbesondere die durch die Magnetkraft bewirkte Verschiebung der Schaltmuffe 18, unmittelbar bevor die Verzahnung 34 Schaltmuffe 18 in Überdeckung mit der Innenverzahnung 26 der Kupplungskörpers 14 gelangt. Hierbei kann zunächst der in Figur 7 gezeigte Zustand eintreten, in dem die Schaltmuffe 18 mit ihrer Verzahnung 34 an einer Stirnseite des Kupplungskörpers 14 anstößt, bis die Ausrichtung der Innenverzahnung 26 des Kupplungskörpers 14 und die Verzahnung 34 der Schaltmuffe 18 ein Eingreifen ermöglicht und die Schaltmuffe 18 aufgrund der in dem Federelement 42 gespeicherten Energie in Eingriff mit der Innenverzahnung 26 des Kupplungskörpers 14 bewegt wird.

Sobald die Schaltmuffe 18 durch Verschiebung des Ankers 28 in Überdeckung mit dem Kupplungskörper 14 gelangt, wird die Schaltmuffe 18 aufgrund der Form der Innenverzahnung 26 des Kupplungskörpers 14 sowie der Verzahnung 34 der Schaltmuffe 18 weiter zum Kupplungskörper 14 hingezogen, bis die Schaltmuffe 18 am Kupplungskörper 14 anstößt, wie in den Figuren 6 und 8 zu sehen ist.

Konkret wird dies dadurch erreicht, dass die Innenverzahnungen 26 der Kupplungskörper 14, 16 und die Verzahnung 34 der Schaltmuffe 18 in Richtung zur Einkupplungsposition hin Hinterschnitte aufweisen, die derart ausgebildet sind, dass eine Drehmomentübertragung zwischen der Welle 12 bzw. der Schaltmuffe 18 und einem Kupplungskörper 14, 16 eine Kraft auf die Schaltmuffe 18 in Richtung der Einkupplungsposition erzeugt.

Der Verschiebeweg der Schaltmuffe 18 in Richtung der Einkupplungsposition ist durch einen Anschlag der Schaltmuffe 18 an den Kupplungskörper 14 begrenzt.

Wie in Figur 6 zu sehen ist, wird dabei eines der Federelemente 42, insbesondere das vom dem Kupplungsköper 14, mit dem die Schaltmuffe 18 in Eingriff ist, weiter beabstandete Federelement 42 komprimiert.

Das Halteelement 60 bewegt sich in die entsprechende Vertiefung 68 der Schaltmuffe 18 hinein, wodurch eine zusätzliche Haltekraft auf die Schaltmuffe 18 wirkt.

Bei der Bewegung der Schaltmuffe 18 von der Auskupplungsposition in die in Figur 6 dargestellte Einkupplungsposition wird das Sperrelement 48 in die Sperrposition bewegt.

Wie in Figur 5 dargestellt, befindet sich das Sperrelement 48 in einer Auskupplungsposition der Schaltmuffe 18 zunächst in der Freigabestellung.

Ein von der Welle 12 abgewandtes Ende des Sperrelements 48 ist dabei in Eingriff mit der Mitnahmegeometrie 50.

Wird der Anker 28 durch Bestromung der Spule 22 verschoben und dadurch die Schaltmuffe 18 aufgrund der Koppelung mit dem Anker 28 über die Federelemente 42 verschoben, bewegt sich das Sperrelement 48 aufgrund der Lagerung des Sperrelements 48 in der Schaltmuffe 18 mit dieser mit, wobei zunächst der in Figur 7 dargestellte Zustand erreicht wird.

Das Sperrelement 48 verbleibt dabei zunächst weiter in der Freigabestellung, wie in Figur 7 gezeigt ist.

Bewegt sich die Schaltmuffe 18 aufgrund der durch das Drehmoment bewirkten Kraft weiter in Richtung der Einkupplungsposition, wird das Sperrelement 48 durch die Bewegung der Schaltmuffe 18 aus der Mitnahmegeometrie 50 herausgezogen, da eine weitere Bewegung des Ankers 28 aufgrund des Anschlags an dem Kupplungskörper 14 blockiert ist.

Bei dieser Bewegung bewegt sich das Sperrelement 48 aus der Vertiefung 52 heraus und gleitet an der Abschrägung 54 entlang, wodurch das Sperrelement 48 nach unten gedrückt wird und somit in die Sperrposition gelangt, wie in Figur 8 gezeigt ist.

Der Anker 28 kann während des Einkupplungszustandes in der gezeigten Stellung verbleiben.

Die Schaltmuffe 18 wird weiterhin in der Einkupplungsposition gehalten, insbesondere durch das Drehmoment und durch die Halteeinrichtung 58.

Zum Öffnen der Kupplung 10 wird der Anker 28 wiederrum durch Bestromen der zweiten Spule 24 in eine Auskupplungsrichtung bewegt, insbesondere so weit, bis der Anker 28 am entgegengesetzten Kupplungskörper 16 anstößt, wie in Figur 9 veranschaulicht.

Die Schaltmuffe 18 bewegt sich mit dem Anker 28 mit aus der Einkupplungsposition heraus.

Ein Zurückkehren der Schaltmuffe 18 in die Auskupplungsposition wird jedoch verhindert, da das Sperrelement 48 sich weiterhin in der Sperrposition befindet.

Konkret stößt das Sperrelement 48 an dem Sperrzahn 70 an.

Auf diese Weise wird die Schaltmuffe 18 bei einem Auskupplungsvorgang zunächst abgebremst, sodass ein ungewolltes Überschwingen der Schaltmuffe 18 über die Auskupplungsposition hinaus zuverlässig verhindert ist.

Um die Schaltmuffe 18 in die Auskupplungsposition zurück zu bewegen, wird die Bestromung der Spule 24 eingestellt, sodass beide Spulen 22, 24 unbestromt sind und der Anker 28 in seine Ausgangsposition zurückkehren kann. Die Verschiebung des Ankers 28 erfolgt dabei durch die in den Federelementen 42 gespeicherte elastische Energie.

Durch die Verschiebung des Ankers 28 in seine Ausgangsposition ist die Vertiefung 52 der Mitnahmegeometrie 50 oberhalb des Sperrelements 48 angeordnet, sodass sich dieses wieder in die Freigabestellung bewegen kann.

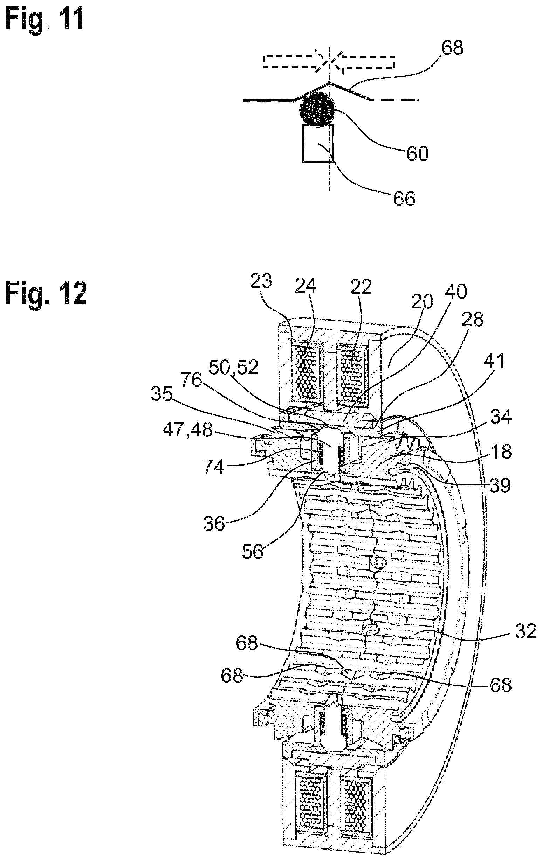

Konkret erfolgt die Rückstellung der Schaltmuffe 18 in die Auskupplungsposition durch die Halteeinrichtung 58, und zwar indem das Halteelement 60 durch die Beaufschlagung gegen eine geneigte Fläche der im Längsschnitt dreieckigen Vertiefung 68 der Schaltmuffe 18 drückt. Dies ist anhand der Prinzipskizze in Figur 11 veranschaulicht.

Da das Sperrelement 48 nicht mehr in der Sperrposition gehalten wird, gleitet das Sperrelement 48 bei der Bewegung der Schaltmuffe 18 am Sperrzahn 70 entlang und wird zurück in die Freigabeposition geschoben.

Die Kupplung 10 befindet sich dann wieder im Ausgangszustand.

Auf die gleiche Weise kann die Schaltmuffe 18 in Eingriff mit dem Kupplungskörper 16 gebracht werden. Zu diesem Zweck wird der Anker 28 durch Bestromung der jeweils anderen Spule 22, 24 in die entgegengesetzte Richtung ausgelenkt.

Durch die mechanische Sperrfunktion ist es möglich, den Anker 28 über eine entsprechende Bestromung der Spulen 22, 24 bei jedem Schaltvorgang bis in seine Endlagen zu bewegen, wodurch geringe Schaltzeiten möglich sind. Insbesondere ist keine aufwendige Positionsregelung erforderlich.

Darüber hinaus lässt sich über die Lage des Ankers 28 indirekt die Position der Schaltmuffe 18 bestimmen.

Anhand der Figuren 12 bis 24 wird eine weitere Ausführungsform der Kupplung 10 beschrieben.

Die in den Figuren 12 bis 24 veranschaulichte Kupplung 10 unterscheidet sich von der vorhergehend beschriebenen Kupplung 10 im Wesentlichen durch die Lagerung des Sperrelements 48.

Für gleiche Strukturen mit gleichen Funktionen, die von der obigen Ausführungsform bekannt sind, werden im Folgenden dieselben Bezugszeichen verwendet und es wird insoweit auf die vorangegangenen Erläuterungen verwiesen, wobei nachfolgend auf die Unterschiede der jeweiligen Ausführungsformen eingegangen wird, um Wiederholungen zu vermeiden.

Wie bei der vorhergehend beschriebenen Ausführungsform ist das Sperrelement 48 als radial verschiebbarer Bolzen ausgebildet, der im Verbindungsring 36 geführt ist.

Im Unterschied zur vorhergehend beschriebenen Ausführungsform ist jedoch das Sperrelement 48 mittels eines elastischen Elements 74, das im Ausführungsbeispiel eine Feder ist, in die Freigabestellung beaufschlagt, wie in Figuren 12, 15 und 18 zu sehen ist.

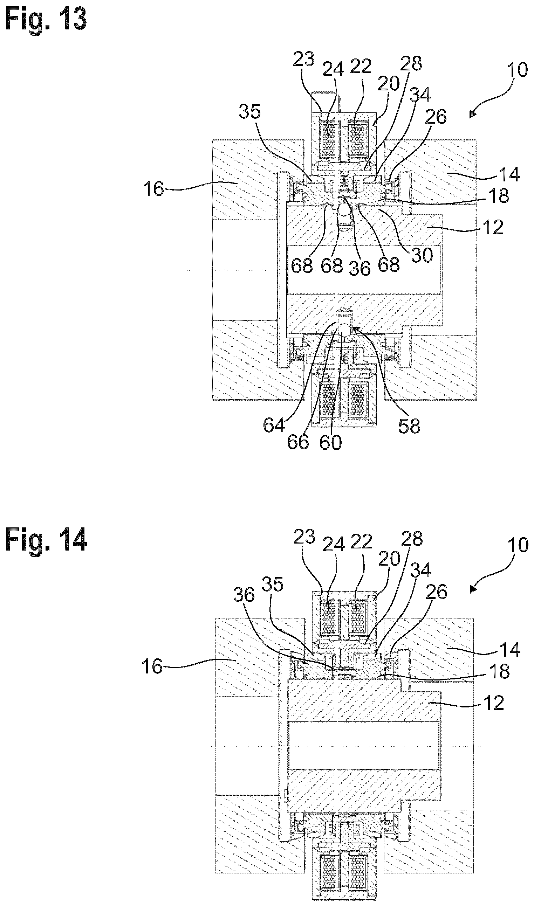

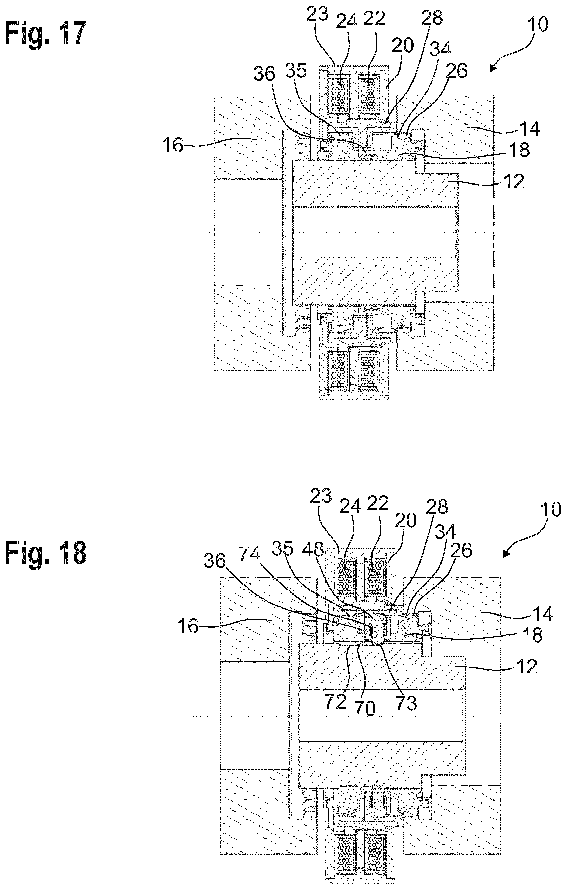

Die Federelemente 42 zur Koppelung des Ankers 28 mit der Schaltmuffe 18 entfallen bei dieser Ausführungsform, wie insbesondere in den Figuren 14 und 17 zu erkennen ist, die einen Längsschnitt durch die Kupplung 10 im Bereich zwischen dem Sperrelement 48 und der Halteeinrichtung 58 zeigen.

Stattdessen ist der Anker 28 über das Sperrelement 48 mit der Schaltmuffe 18 gekoppelt, wie nachfolgend erläutert.

Am Anker 28 ist ebenfalls eine Mitnahmegeometrie 50 mit einer Vertiefung 52 vorgesehen, wobei die Mitnahmegeometrie 50 zu beiden Seiten hin eine Abstufung 76 hat. Dadurch ist die Vertiefung 52 in einem zentralen Bereich tiefer als in den seitlichen Bereichen.

Im zentralen Bereich ist die Kontur der Vertiefung 52 vorzugsweise an die Kontur des Sperrelements 48 angepasst.

Im Neutralzustand der Kupplung 10, also wenn die Schaltmuffe 18 in der Auskupplungsposition ist, wird das Sperrelement 48 durch das elastische Element 74 in den zentralen, tieferen Bereich der Mitnahmegeometrie 50 bzw. der Vertiefung 52 beaufschlagt, wodurch der Anker 28 mit der Schaltmuffe 18 lösbar gekoppelt ist.

Insbesondere ist das Sperrelement 48 mit dem Anker 28 kraft- und formschlüssig gekoppelt. Dadurch wird das Sperrelement 48 bei einer Bewegung des Ankers 28 ebenfalls verschoben, insbesondere solange das Sperrelement 48 in der Freigabeposition ist.

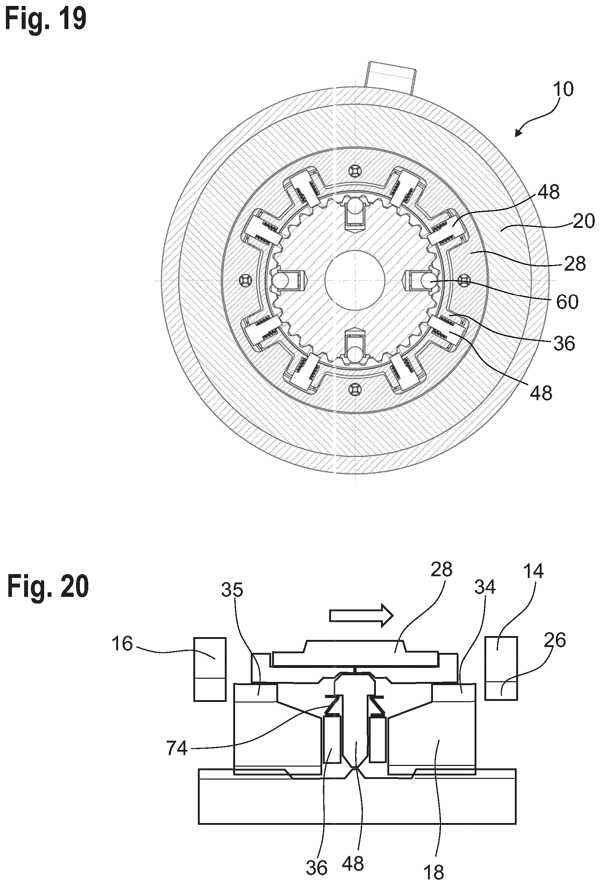

Bei der Ausführungsform gemäß den Figuren 12 bis 19 sind insgesamt sechs Sperrelemente 48 vorhanden (siehe Figuren 8 und 19), die umfangsmäßig verteilt sind, wobei die Sperrelemente 48 in Umfangsrichtung nicht zwingend gleichmäßig beabstandet sein müssen.

Die Halteeinrichtung 58 ist grundsätzlich identisch wie in der vorhergehend beschriebenen Ausführungsform ausgebildet.

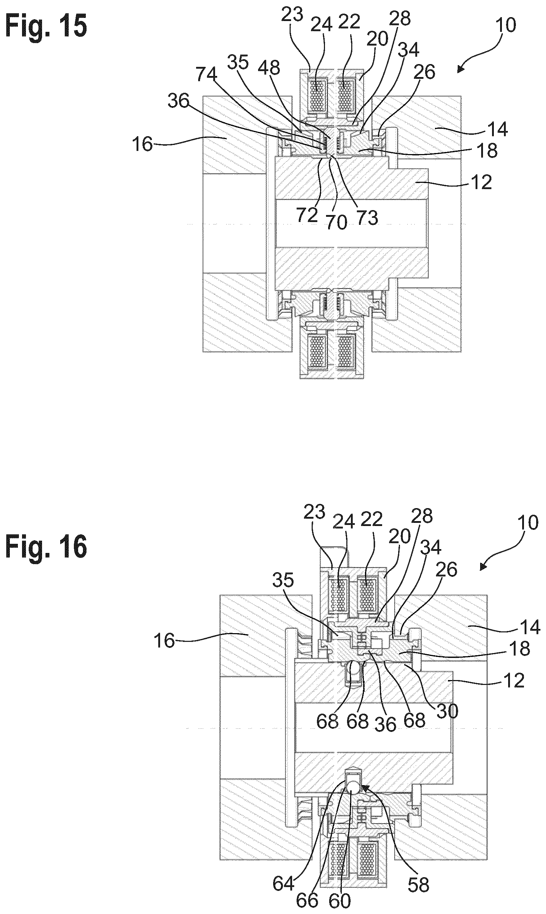

Allerdings haben alle Vertiefungen 68 in der Schaltmuffe 18 einen im Querschnitt dreieckigen Querschnitt, wie in den Figuren 13 und 16 zu sehen ist, während bei der vorhergehend beschriebenen Ausführungsform die beiden äußeren Vertiefungen 68 einen halbrunden Querschnitt haben.

Die Betätigung der Kupplung 10 gemäß den Figuren 12 bis 19 unterscheidet sich lediglich geringfügig von der Betätigung der Kupplung 10 gemäß den Figuren 1 bis 11.

Im Folgenden wird anhand der Figuren 20 bis 24 die Betätigung der Kupplung 10 erläutert.

Figur 20 zeigt die Kupplung 10 in einem Neutralzustand. Der Anker 28 und die Schaltmuffe 18 befinden sich in einer Mittellage bzw. in der Auskupplungsposition.

Wird die erste Spule 22 bestromt, wird der Anker 28 verschoben, wie in Figur 20 durch den Pfeil nach rechts veranschaulicht ist, wobei die Schaltmuffe 18 aufgrund der Koppelung des Ankers 28 mit dem Sperrelement 48 zusammen mit dem Anker 28 verschoben wird.

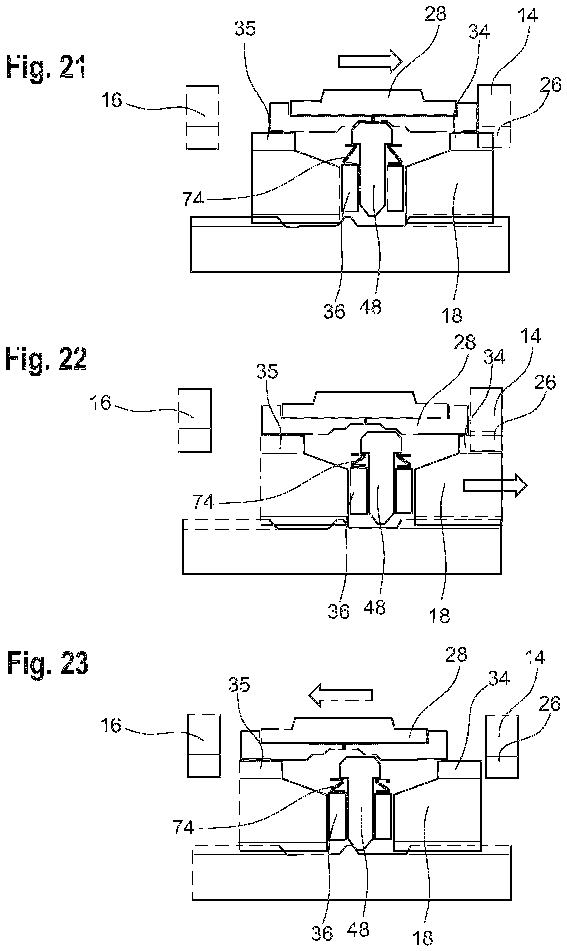

In Figur 21 ist die Schaltmuffe 18 in einer Position gezeigt, die durch eine rein magnetische Kraft erreicht werden kann.

Der Anker 28 befindet sich bereits in Anschlag am Kupplungskörper 14, sodass eine weitere Verschiebung des Ankers 28 in die Einkupplungsrichtung nicht möglich ist.

Es ist jedoch bereits eine gewisse Überdeckung der Verzahnung 34 der Schaltmuffe 18 mit der Innenverzahnung 26 des Kupplungskörpers 14 vorhanden.

Wie bereits in Zusammenhang mit der vorhergehenden beschriebenen Ausführungsform erläutert wurde, wird die Schaltmuffe 18 aufgrund der speziellen Form der Verzahnung mit Hinterschnitten in Richtung zur Einkupplungsposition und dem wirkenden Drehmoment weiter in Richtung der Einkupplungsposition gezogen, bis die in Figur 22 gezeigte Position erreicht ist.

Bei dieser Bewegung der Schaltmuffe 18 wird das Sperrelement 48 aus dem zentralen Bereich der Mitnahmegeometrie 50 heraus gezogen, wobei das Sperrelement 48 entgegen der Federkraft der des elastischen Elements 74 über die Stufe hinweg nach unten in die Sperrposition gedrückt wird. Dies wird dadurch verursacht, dass eine weitere Bewegung des Ankers 28 durch Anlage am Kupplungskörper 14 blockiert ist, während sich die Schaltmuffe 18 weiter bewegen kann und dadurch relativ zum Anker 18 verschoben wird.

Die Schaltmuffe 18 sowie der Anker 28 werden durch die Halteeinrichtung 58 in der in Figur 22 gezeigten Position gehalten, solange die Spulen 22, 24 unbestromt sind.

Das Auskuppeln erfolgt ebenso wie bei der vorhergehend beschriebenen Ausführungsform durch Bestromung der weiteren Spule 24, wobei das Sperrelement 48 am Sperrzahn 70 anschlägt und ein Zurückkehren der Schaltmuffe 18 in die Auskupplungsposition zunächst blockiert (siehe Figur 23).

Der Anker 28 kann hierbei nicht in Anlage mit dem entgegengesetzten Kupplungskörper 16 gelangen, da der Anker 28 durch die Mitnahmegeometrie 50 am Sperrelement 48 zurückgehalten wird.

Um ein Zurückkehren der Schaltmuffe 18 in die Auskupplungsposition zu ermöglichen, wird der Anker 28 durch kurzzeitiges Bestromen der ersten Spule 22 erneut nach rechts bewegt, bis der zentrale Bereich der Mitnahmegeometrie 50 oberhalb des Sperrelements 48 angeordnet ist, sodass sich das Sperrelement 48 aufgrund der Federkraft in die Freigabestellung bewegen kann.

Das Zurückstellen in die Auskupplungsposition aus der in Figur 23 gezeigten Position heraus erfolgt, wie bereits in Figur 11 veranschaulicht, durch die Halteeinrichtung 58, insbesondere indem die Halteelemente 60 jeweils gegen die schräge Fläche der dreieckigen Vertiefungen 68 drücken.

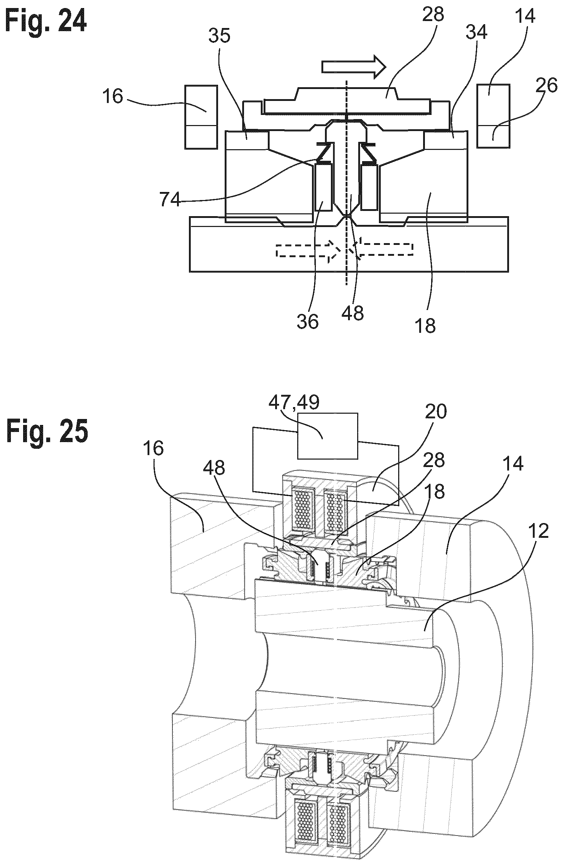

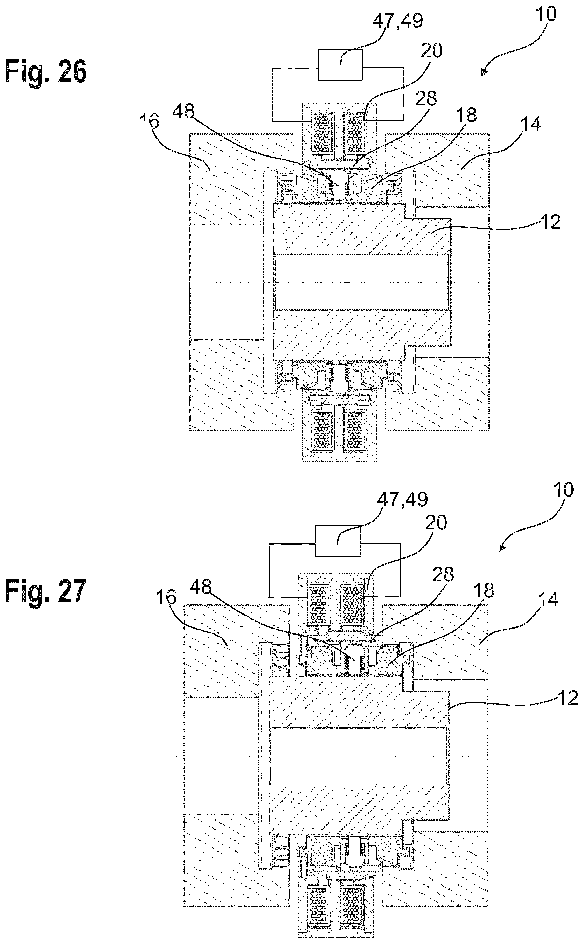

In den Figuren 25 bis 27 ist eine weitere Ausführungsform der elektromagnetischen Kupplung 10 gezeigt.

Die in den Figuren 25 bis 27 dargestellte Ausführungsform basiert auf der in den Figuren 12 bis 24 veranschaulichten Ausführungsform.

Allerdings hat das Sperrelement 48 gemäß der in den Figuren 25 bis 27 dargestellten Ausführungsform keine Sperrfunktion, sondern lediglich eine Kopplungsfunktion. Insbesondere koppelt das Sperrelement 48 wie vorhergehend beschrieben den Anker 28 mit der Schaltmuffe 18.

Der Sperrzahn 70 sowie die Spitze 73 am Sperrelement 48 entfallen. Stattdessen umfasst die Sperreinrichtung 47 eine Steuereinheit 49, die eine Bestromung der ersten Spule und der zweiten Spule derart regelt, dass bei einer Verschiebung der Schaltmuffe aus einer Einkupplungsposition in Richtung der Auskupplungsposition eine Bewegung der Schaltmuffe über die Auskupplungsposition hinweg in Richtung der weiteren Einkupplungsposition verhindert ist.

## Patentansprüche

1. Elektromagnetische Kupplung (10), mit
einer Schaltmuffe (18), die drehfest auf einer Welle (12) angeordnet ist und entlang der Welle (12) linear zwischen einer ersten Einkupplungsposition, einer zweiten Einkupplungsposition und einer zwischen den Einkupplungspositionen liegenden Auskupplungsposition verschiebbar ist,
einem ersten Kupplungskörper (14) und einem zweiten Kupplungskörper (16), die axial voneinander beabstandet sind und jeweils koaxial zur Welle (12) ausgerichtet sind, wobei jeder Kupplungskörper (14) eine Innenverzahnung (26) aufweist, und
einem Stator (20) mit einer ersten und einer zweiten bestrombaren Spule (22, 24) zur direkten oder indirekten Verstellung der Schaltmuffe (18) entlang der Welle (12),
wobei die Schaltmuffe (18) eine erste Verzahnung (34) zum Eingriff in die Innenverzahnung (26) des ersten Kupplungskörpers (14) in der ersten Einkupplungsposition und eine zweite Verzahnung (35) zum Eingriff in die Innenverzahnung (26) des zweiten Kupplungskörpers (16) in der zweiten Einkupplungsposition hat, und
mit einer Sperreinrichtung (47), die bei einer Verschiebung der Schaltmuffe (18) aus einer Einkupplungsposition in Richtung der Auskupplungsposition eine Bewegung der Schaltmuffe (18) über die Auskupplungsposition hinweg in Richtung der weiteren Einkupplungsposition verhindert, und
**dadurch gekennzeichnet, dass** die Kupplung (10) eine Halteeinrichtung (58) umfasst, die eingerichtet ist, die Schaltmuffe (18) im unbestromten Zustand der Spulen (22, 24) in der Auskupplungsposition oder in der Einkupplungsposition zu halten.

2. Elektromagnetische Kupplung (10) nach Anspruch 1, **dadurch gekennzeichnet, dass** die Sperreinrichtung (47) ein Sperrelement (48) umfasst, das ein zwischen einer Freigabeposition und einer Sperrposition radial verschiebbarer Bolzen ist.

3. Elektromagnetische Kupplung (10) nach Anspruch 2, **dadurch gekennzeichnet, dass** das Sperrelement (48) mittels eines elastischen Elements (74) in die Freigabeposition beaufschlagt ist, insbesondere dass das Sperrelement (48) bei einer Bewegung der Schaltmuffe (18) von der Auskupplungsposition in eine Einkupplungsposition entgegen der Federkraft des elastischen Elements (74) in die Sperrposition bewegt wird.

4. Elektromagnetische Kupplung (10) nach einem der Ansprüche 2 und 3, **dadurch gekennzeichnet, dass** das Sperrelement (48) in der Schaltmuffe (18) radial verschiebbar gelagert ist, insbesondere dass die Schaltmuffe (18) mittig geteilt ist und die beiden Teile der Schaltmuffe (18) durch einen Verbindungsring (36) axial aneinander befestigt sind, wobei das Sperrelement (48) in dem Verbindungsring (36) radial verschiebbar geführt ist.

5. Elektromagnetische Kupplung (10) nach einem der vorhergehenden Ansprüche, **dadurch gekennzeichnet, dass** die Kupplung (10) einen Anker (28) umfasst, der mit der Schaltmuffe (18) gekoppelt ist, wobei der Anker (28) durch Bestromen der ersten oder der zweiten Spule (22, 24) des Stators (20) entlang der ersten Welle (12) verschiebbar ist.

6. Elektromagnetische Kupplung (10) nach Anspruch 5 und zusätzlich nach einem der Ansprüche 2 bis 4, **dadurch gekennzeichnet, dass** der Anker (28) mittels des Sperrelements (48) mit der Schaltmuffe (18) in Bewegungsrichtung lösbar gekoppelt ist.

7. Elektromagnetische Kupplung (10) nach Anspruch 5, **dadurch gekennzeichnet, dass** der Anker (28) mit der Schaltmuffe (18) über zwei elastische Federelemente (42) gekoppelt ist, die an entgegengesetzten axialen Flächen des Ankers (28) anliegen und jeweils mit einem vom Anker (28) abgewandten Ende an der Schaltmuffe (18) anliegen.

8. Elektromagnetische Kupplung (10) nach Anspruch 6 oder 7 und zusätzlich nach Anspruch 2, **dadurch gekennzeichnet, dass** an dem Anker (28) eine Mitnahmegeometrie (50) zur formschlüssigen Koppelung des Ankers (28) mit dem Sperrelement (48) vorhanden ist, wobei die Mitnahmegeometrie (50) eine Abstufung (76) oder eine Abschrägung (54) hat, die derart ausgebildet ist, dass sich das Sperrelement (48) bei einer Verschiebung der Schaltmuffe (18) relativ zum Anker (28) durch eine Bewegung entlang der Abstufung (76) oder der Abschrägung (54) aus der Freigabeposition in die Sperrposition bewegt oder umgekehrt.

9. Elektromagnetische Kupplung (10) nach einem der vorhergehenden Ansprüche, soweit auf Anspruch 2 rückbezogen, **dadurch gekennzeichnet, dass** an der Außenseite der ersten Welle (12) eine Führungsfläche (72) vorhanden ist, wobei mittig an der Führungsfläche (72) ein Sperrzahn (70) angeordnet ist, an dem das Sperrelement (48) bei einer Bewegung aus der Einkupplungsposition in die Auskupplungsposition anschlägt.

10. Elektromagnetische Kupplung (10) nach einem der vorhergehenden Ansprüche, **dadurch gekennzeichnet, dass** die Halteeinrichtung (58) mindestens ein in der Welle gelagertes, elastisch gegen die Schaltmuffe (18) beaufschlagtes Halteelement (60) hat, und die Schaltmuffe (18) im Bereich des Halteelements (60) drei axial voneinander beabstandete Vertiefungen (68) hat, wobei das Halteelement (60) in einer Einkupplungsposition oder der Auskupplungsposition der Schaltmuffe (18) zumindest abschnittweise in eine entsprechende Vertiefung (68) hineinragt.

11. Elektromagnetische Kupplung (10) nach einem der vorhergehenden Ansprüche, **dadurch gekennzeichnet, dass** die Sperreinrichtung (47) eine Steuereinheit umfasst, die eingerichtet ist, eine Bestromung der ersten Spule (22) und der zweiten Spule (24) derart zu regeln, dass bei einer Verschiebung der Schaltmuffe (18) aus einer Einkupplungsposition in Richtung der Auskupplungsposition eine Bewegung der Schaltmuffe (18) über die Auskupplungsposition hinweg in Richtung der weiteren Einkupplungsposition verhindert ist.

12. Verfahren zum Betätigen einer elektromagnetischen Kupplung (10) gemäß einem der Ansprüche 1 bis 11, umfassend die folgenden Schritte:
- während die Schaltmuffe (18) in einer Auskupplungsposition ist, wird die erste oder die zweite Spule (22, 24) bestromt, wodurch die Schaltmuffe (18) in Richtung der entsprechenden Einkupplungsposition bewegt wird,
- während der Bewegung der Schaltmuffe (18) von der Auskupplungsposition in eine Einkupplungsposition, insbesondere spätestens bei Erreichen der Einkupplungsposition, wird das Sperrelement (48) in radialer Richtung aus einer Freigabeposition in eine Sperrposition bewegt, und
- bei einer anschließenden Bewegung der Schaltmuffe (18) aus der Einkupplungsposition heraus in Richtung der Auskupplungsposition durch Bestromen der weiteren Spule (22, 24) wird eine Bewegung der Schaltmuffe (18) in die Auskupplungsposition durch das Sperrelement (48) blockiert.

13. Verfahren nach Anspruch 12, **dadurch gekennzeichnet, dass** durch eine erneute Bestromung der zur Bewegung der Schaltmuffe (18) in die Einkupplungsposition bestromten ersten oder zweiten Spule (22) das Sperrelement in eine Freigabestellung bewegt wird, wodurch die Schaltmuffe (18) in die Auskupplungsposition zurückkehren kann und/oder dass nach dem Bestromen der weiteren Spule (22, 24) die Bestromung eingestellt wird, wodurch sich der Anker (28) in seine Ausgangsposition zurückbewegt, wobei sich das Sperrelement (48) in die Freigabestellung zurückbewegen kann.

14. Verfahren nach einem der Ansprüche 12 und 13, **dadurch gekennzeichnet, dass** bei einer elektromagnetischen Kupplung (10) nach Anspruch 10 eine Rückstellung der Schaltmuffe (18) in die Auskupplungsposition durch die Halteeinrichtung (58) erfolgt, insbesondere indem das Halteelement (60) durch die Beaufschlagung gegen eine geneigte Fläche der im Längsschnitt dreieckigen Vertiefung (68) der Schaltmuffe (18) drückt.

15. Verfahren zum Betätigen einer elektromagnetischen Kupplung (10) gemäß Anspruch 11, umfassend die folgenden Schritte:
- während die Schaltmuffe (18) in einer Auskupplungsposition ist, wird die erste oder die zweite Spule (22, 24) bestromt, wodurch die Schaltmuffe (18) in Richtung der entsprechenden Einkupplungsposition bewegt wird,
- bei einer anschließenden Bewegung der Schaltmuffe (18) aus der Einkupplungsposition heraus in Richtung der Auskupplungsposition regelt die Steuereinheit (49) eine Bestromung der ersten Spule (22) und der zweiten Spule (24) derart, dass bei einer Verschiebung der Schaltmuffe (18) aus einer Einkupplungsposition in Richtung der Auskupplungsposition eine Bewegung der Schaltmuffe (18) über die Auskupplungsposition hinweg in Richtung der weiteren Einkupplungsposition verhindert ist.

## Claims

1. An electromagnetic clutch (10), comprising
a shifting sleeve (18) which is arranged on a shaft (12) for joint rotation therewith and is linearly displaceable along the shaft (12) between a first engaged position, a second engaged position and a disengaged position located between the engaged positions,
a first clutch body (14) and a second clutch body (16), which are axially spaced apart from each other and are each aligned coaxially with the shaft (12), each clutch body (14) having an internal toothing (26), and
a stator (20) having a first and a second energizable coil (22, 24) for direct or indirect adjustment of the shifting sleeve (18) along the shaft (12),
the shifting sleeve (18) having a first toothing (34) for engaging the internal toothing (26) of the first clutch body (14) in the first engaged position and a second toothing (35) for engaging the internal toothing (26) of the second clutch body (16) in the second engaged position, and
comprising a locking means (47) which prevents the shifting sleeve (18) from moving beyond the disengaged position in the direction of the further engaged position when the shifting sleeve (18) is displaced out of an engaged position in the direction of the disengaged position, and
**characterized in that** the clutch (10) comprises a holding means (58) which is configured to hold the shifting sleeve (18) in the disengaged position or in the engaged position in the de-energized state of the coils (22, 24).

2. The electromagnetic clutch (10) according to claim 1, **characterized in that** the locking means (47) comprises a locking element (48) which is a bolt which is radially displaceable between a release position and a locking position.

3. The electromagnetic clutch (10) according to claim 2, **characterized in that** the locking element (48) is acted upon into the release position by means of an elastic element (74), in particular **in that** the locking element (48) is moved into the locking position against the spring force of the elastic element (74) when the shifting sleeve (18) moves from the disengaged position into an engaged position.

4. The electromagnetic clutch (10) according to either of claims 2 and 3, **characterized in that** the locking element (48) is mounted in the shifting sleeve (18) so as to be radially displaceable, in particular **in that** the shifting sleeve (18) is divided in the center and the two parts of the shifting sleeve (18) are fastened axially to each other by a connecting ring (36), the locking element (48) being guided for radial displacement in the connecting ring (36).

5. The electromagnetic clutch (10) according to any of the preceding claims, **characterized in that** the clutch (10) comprises an armature (28) which is coupled to the shifting sleeve (18), the armature (28) being displaceable along the first shaft (12) by energizing the first or the second coil (22, 24) of the stator (20).

6. The electromagnetic clutch (10) according to claim 5 and additionally according to any of claims 2 to 4, **characterized in that** the armature (28) is detachably coupled to the shifting sleeve (18) in the direction of movement by means of the locking element (48).

7. The electromagnetic clutch (10) according to claim 5, **characterized in that** the armature (28) is coupled to the shifting sleeve (18) via two elastic spring elements (42) which rest against opposite axial surfaces of the armature (28) and each rest against the shifting sleeve (18) by an end facing away from the armature (28).

8. The electromagnetic clutch (10) according to claim 6 or 7 and additionally according to claim 2, **characterized in that** a driving geometry (50) for the positive coupling of the armature (28) to the locking element (48) is present on the armature (28), the driving geometry (50) having a step (76) or a bevel (54) which is configured such that the locking element (48) moves out of the release position into the locking position or vice versa by a movement along the step (76) or the bevel (54) when the shifting sleeve (18) is displaced relative to the armature (28).

9. The electromagnetic clutch (10) according to any of the preceding claims, if dependent on claim 2, **characterized in that** a guiding surface (72) is present on the outer side of the first shaft (12), a locking tooth (70) being arranged centrally on the guiding surface (72), against which the locking element (48) abuts when moving out of the engaged position into the disengaged position.

10. The electromagnetic clutch (10) according to any of the preceding claims, **characterized in that** the holding means (58) has at least one holding element (60) which is mounted in the shaft and elastically acted upon against the shifting sleeve (18), and **in that** the shifting sleeve (18) has three axially spaced recesses (68) in the area of the holding element (60), the holding element (60) projecting at least in sections into a corresponding recess (68) in an engaged position or the disengaged position of the shifting sleeve (18).

11. The electromagnetic clutch (10) according to any of the preceding claims, **characterized in that** the locking means (47) comprises a control unit which is configured to regulate an energization of the first coil (22) and the second coil (24) such that when the shifting sleeve (18) is displaced from an engaged position in the direction of the disengaged position, a movement of the shifting sleeve (18) beyond the disengaged position in the direction of the further engaged position is prevented.

12. A method of actuating an electromagnetic clutch (10) according to any of claims 1 to 11, comprising the following steps:
- while the shifting sleeve (18) is in a disengaged position, the first or the second coil (22, 24) is energized, causing the shifting sleeve (18) to be moved in the direction of the corresponding engaged position,
- during the movement of the shifting sleeve (18) from the disengaged position into an engaged position, in particular at the latest when the engaged position is reached, the locking element (48) is moved in the radial direction out of a release position into a locking position, and
- during a subsequent movement of the shifting sleeve (18) out of the engaged position in the direction of the disengaged position by energizing the further coil (22, 24), the locking element (48) blocks a movement of the shifting sleeve (18) into the disengaged position.

13. The method according to claim 12, **characterized in that** the locking element is moved into a release position by a re-energization of the first or the second coil (22) energized to move the shifting sleeve (18) into the engaged position, allowing the shifting sleeve (18) to return into the disengaged position, and/or **in that** after energization of the further coil (22, 24) the energization is stopped, causing the armature (28) to move back into its initial position, the locking element (48) being able to move back into the release position.

14. The method according to either of claims 12 and 13, **characterized in that** in an electromagnetic clutch (10) according to claim 10, the shifting sleeve (18) is reset to the disengaged position by the holding means (58), in particular by the holding element (60) pressing against an inclined surface of the recess (68), which is triangular in a longitudinal section, of the shifting sleeve (18) when it is acted upon.

15. The method of actuating an electromagnetic clutch (10) according to claim 11, comprising the following steps:
- while the shifting sleeve (18) is in a disengaged position, the first or the second coil (22, 24) is energized, causing the shifting sleeve (18) to be moved in the direction of the corresponding engaged position,
- during a subsequent movement of the shifting sleeve (18) out of the engaged position in the direction of the disengaged position, the control unit (49) regulates an energization of the first coil (22) and the second coil (24) such that when the shifting sleeve (18) is displaced from an engaged position in the direction of the disengaged position, a movement of the shifting sleeve (18) beyond the disengaged position in the direction of the further engaged position is prevented.

## Revendications

1. Embrayage électromagnétique (10) comprenant
une douille de passage de vitesses (18) qui est montée de manière solidaire en rotation sur un arbre (12) et qui est apte à coulisser linéairement le long de l'arbre (12) entre une première position d'embrayage, une deuxième position d'embrayage et une position de débrayage située entre les positions d'embrayage,
un premier corps d'embrayage (14) et un deuxième corps d'embrayage (16), qui sont espacés axialement l'un de l'autre et chacun alignés de manière coaxiale par rapport à l'arbre (12), chaque corps d'embrayage (14) présentant une denture intérieure (26), et
un stator (20) comportant une première et une deuxième bobine (22, 24) aptes à être alimentées en courant pour le déplacement direct ou indirect de la douille de passage de vitesses (18) le long de l'arbre (12),
la douille de passage de vitesses (18) présentant une première denture (34) pour l'engagement dans la denture intérieure (26) du premier corps d'embrayage (14) dans la première position d'embrayage et une deuxième denture (35) pour l'engagement dans la denture intérieure (26) du deuxième corps d'embrayage (16) dans la deuxième position d'embrayage, et
comprenant un moyen de verrouillage (47) qui, lors d'un déplacement de la douille de passage de vitesses (18) d'une position d'embrayage vers la position de débrayage, empêche un mouvement de la douille de passage de vitesses (18) au-delà de la position de débrayage vers la position d'embrayage supplémentaire, et
**caractérisé en ce que** l'embrayage (10) comprend un moyen de retenue (58) qui est réalisé de manière à maintenir la douille de passage de vitesses (18) dans la position de débrayage ou dans la position d'embrayage lorsque les bobines (22, 24) ne sont pas alimentées en courant.

2. Embrayage électromagnétique (10) selon la revendication 1, **caractérisé en ce que** le moyen de verrouillage (47) comprend un élément de verrouillage (48) qui est un boulon radialement déplaçable entre une position de libération et une position de verrouillage.

3. Embrayage électromagnétique (10) selon la revendication 2, **caractérisé en ce que** l'élément de verrouillage (48) est sollicité dans la position de libération au moyen d'un élément élastique (74), en particulier **en ce que** l'élément de verrouillage (48) est déplacé dans la position de verrouillage à l'encontre de la force de ressort de l'élément élastique (74) lors d'un mouvement de la douille de passage de vitesses (18) de la position de débrayage vers une position d'embrayage.

4. Embrayage électromagnétique (10) selon l'une des revendications 2 et 3, **caractérisé en ce que** l'élément de verrouillage (48) est monté de manière à être radialement déplaçable dans la douille de passage de vitesses (18), en particulier **en ce que** la douille de passage de vitesses (18) est divisée au centre et les deux parties de la douille de passage de vitesses (18) sont fixées axialement l'une à l'autre par une bague de liaison (36), l'élément de verrouillage (48) étant guidé de manière radialement déplaçable dans la bague de liaison (36).

5. Embrayage électromagnétique (10) selon l'une des revendications précédentes, **caractérisé en ce que** l'embrayage (10) comprend un induit (28) qui est couplé à la douille de passage de vitesses (18), l'induit (28) étant apte à être déplacé le long du premier arbre (12) par l'alimentation en courant de la première ou de la deuxième bobine (22, 24) du stator (20).

6. Embrayage électromagnétique (10) selon la revendication 5 et en outre selon l'une des revendications 2 à 4, **caractérisé en ce que** l'induit (28) est couplé de manière détachable à la douille de passage de vitesses (18) dans le sens de déplacement au moyen de l'élément de verrouillage (48).

7. Embrayage électromagnétique (10) selon la revendication 5, **caractérisé en ce que** l'induit (28) est couplé à la douille de passage de vitesses (18) par deux éléments à ressort élastiques (42) qui s'appuient sur des surfaces axiales opposées de l'induit (28) et s'appuient chacun par une extrémité détournée de l'induit (28) sur la douille de passage de vitesses (18).

8. Embrayage électromagnétique (10) selon la revendication 6 ou 7 et en outre selon la revendication 2, **caractérisé en ce qu'**une géométrie d'entraînement (50) pour le couplage par coopération de formes de l'induit (28) avec l'élément de verrouillage (48) est prévue sur l'induit (28), la géométrie d'entraînement (50) présentant un gradin (76) ou un biseau (54) réalisé de sorte que, lors d'un déplacement de la douille de passage de vitesses (18) par rapport à l'induit (28), l'élément de verrouillage (48) se déplace de la position de libération à la position de verrouillage ou vice versa par un mouvement le long du gradin (76) ou du biseau (54).

9. Embrayage électromagnétique (10) selon l'une des revendications précédentes, dans la mesure où elle dépend de la revendication 2, **caractérisé en ce qu'**une surface de guidage (72) est prévue sur la face extérieure du premier arbre (12), une dent de verrouillage (70) étant agencée au centre de la surface de guidage (72), sur laquelle l'élément de verrouillage (48) vient buter lors d'un mouvement de la position d'embrayage vers la position de débrayage.

10. Embrayage électromagnétique (10) selon l'une des revendications précédentes, **caractérisé en ce que** le moyen de retenue (58) présente au moins un élément de retenue (60) monté dans l'arbre et sollicité élastiquement contre la douille de passage de vitesses (18), et la douille de passage de vitesses (18) présente, dans la zone de l'élément de retenue (60), trois évidements (68) espacés axialement les uns des autres, l'élément de retenue (60) s'engageant au moins par tronçons dans un évidement (68) correspondant dans une position d'embrayage ou de débrayage de la douille de passage de vitesses (18).

11. Embrayage électromagnétique (10) selon l'une des revendications précédentes, **caractérisé en ce que** le moyen de verrouillage (47) comprend une unité de commande qui est aménagée de manière à réguler une alimentation en courant de la première bobine (22) et de la deuxième bobine (24) de manière à empêcher un mouvement de la douille de passage de vitesses (18) au-delà de la position de débrayage vers la position d'embrayage supplémentaire lors d'un déplacement de la douille de passage de vitesses (18) d'une position d'embrayage vers la position de débrayage.

12. Procédé d'actionnement d'un embrayage électromagnétique (10) selon l'une des revendications 1 à 11, comprenant les étapes suivantes :
- tandis que la douille de passage de vitesses (18) se trouve dans une position de débrayage, la première ou la deuxième bobine (22, 24) est alimentée en courant, ce qui déplace la douille de passage de vitesses (18) vers la position d'embrayage correspondante,
- pendant le mouvement de la douille de passage de vitesses (18) de la position de débrayage vers une position d'embrayage, en particulier au plus tard lorsque la position d'embrayage est atteinte, l'élément de verrouillage (48) est déplacé dans le sens radial d'une position de libération vers une position de verrouillage, et
- lors d'un mouvement ultérieur de la douille de passage de vitesses (18) hors de la position d'embrayage vers la position de débrayage par alimentation en courant de la bobine (22, 24) supplémentaire, un mouvement de la douille de passage de vitesses (18) vers la position de débrayage est bloqué par l'élément de verrouillage (48).

13. Procédé selon la revendication 12, **caractérisé en ce que**, par une nouvelle alimentation en courant de la première ou de la deuxième bobine (22) alimentée en courant pour déplacer la douille de passage de vitesses (18) vers la position d'embrayage, l'élément de verrouillage est déplacé vers une position de libération, ce qui permet à la douille de passage de vitesses (18) de revenir dans la position de débrayage, et/ou **en ce qu'**après l'alimentation en courant de la bobine (22, 24) supplémentaire, l'alimentation en courant est interrompue, grâce à quoi l'induit (28) revient dans sa position initiale, l'élément de verrouillage (48) étant apte à revenir dans la position de libération.

14. Procédé selon l'une des revendications 12 et 13, **caractérisé en ce que**, dans le cas d'un embrayage électromagnétique (10) selon la revendication 10, le retour de la douille de passage de vitesses (18) dans la position de débrayage est effectué par le moyen de retenue (58), en particulier **en ce que** l'élément de retenue (60) appuie par la sollicitation contre une surface inclinée de l'évidement (68) de forme triangulaire en coupe longitudinale de la douille de passage de vitesses (18).

15. Procédé d'actionnement d'un embrayage électromagnétique (10) selon la revendication 11, comprenant les étapes suivantes :
- tandis que la douille de passage de vitesses (18) se trouve dans une position de débrayage, la première ou la deuxième bobine (22, 24) est alimentée en courant, ce qui déplace la douille de passage de vitesses (18) vers la position d'embrayage correspondante,
- lors d'un mouvement ultérieur de la douille de passage de vitesses (18) hors de la position d'embrayage vers la position de débrayage, l'unité de commande (49) régule une alimentation en courant de la première bobine (22) et de la deuxième bobine (24) de manière à empêcher un mouvement de la douille de passage de vitesses (18) au-delà de la position de débrayage vers la position d'embrayage supplémentaire lors d'un déplacement de la douille de passage de vitesses (18) d'une position d'embrayage vers la position de débrayage.
